(19) Europäisches Patentamt
European Patent Office
Office européen des brevets

(11) Veröffentlichungsnummer: **0 355 002 A2**

## (12) EUROPÄISCHE PATENTANMELDUNG

(21) Anmeldenummer: 89114313.3

(22) Anmeldetag: 03.08.89

(51) Int. Cl.4 C08L 81/02 , C08K 5/00 , C08K 5/03

(30) Priorität: 16.08.88 DE 3827644

(43) Veröffentlichungstag der Anmeldung: 21.02.90 Patentblatt 90/08

(84) Benannte Vertragsstaaten: BE DE FR GB IT

(71) Anmelder: BAYER AG

D-5090 Leverkusen 1 Bayerwerk(DE)

(72) Erfinder: Köhler, Burkhard, Dr.
Virneburgstrasse 9
D-4150 Krefeld 11(DE)
Erfinder: Heywang, Gerhard, Dr.
Nittumer Weg 4
D-5060 Bergisch Gladbach 2(DE)
Erfinder: Zirngiebl, Eberhard, Dr.
Roggendorfstrasse 65
D-5000 Köln 80(DE)

# (54) Polyarylensulfid-Mischungen mit verringerter Radikalbildung bei Ultrakurzbewitterung.

(57) Die Erfindung betrifft Mischungen aus Polyarylensulfiden (PAS), vorzugsweise Polyphenylsulfid (PPS) und Pyrenen. Die Mischungen zeigen verringerte Radikalbildung bei Ultrakurzbewitterung (UV-Bestrahlung).

EP 0 355 002 A2

# Polyarylensulfid-Mischungen mit verringerter Radikalbildung bei Ultrakurzbewitterung

Die Erfindung betrifft Mischungen aus Polyarylensulfiden (PAS), vorzugsweise Polyphenylsulfid (PPS) und Pyrenen. Die Mischungen zeigen verringerte Radikalbildung bei Ultrakurzbewitterung (UV-Bestrahlung).

Polyarylensulfide und ihre Herstellung sind bekannt (z.B. US-PS 3 354 129, EP-OS 171 021).

Polyarylensulfidharze sind in ihrer Wärmebeständigkeit, Lösungsmittelstabilität, Flammwidrigkeit und anderen Eigenschaften vielen Thermoplasten überlegen. Nachteilig ist jedoch ihre mangelnde Beständigkeit gegenüber UV-Strahlung, insbesondere in Gegenwart von Sauerstoff. Daher sind Formteile, Folien und Fasern aus PAS z.B. für den Außeneinsatz nur bedingt geeignet.

Es ist bekannt, daß PPS, wie andere Kunststoffe auch, mit mindestens 10 Gew.-% Ruß stabilisiert werden kann (z.B. JA-OS 100 139). Nachteile dieser PAS-Compounds sind, daß sie nur für schwarz gefärbte Teile verwendet werden können und daß die sehr guten elektrischen Isolatoreneigenschaften von Polyarylensulfiden verschlechtert werden.

Ferner ist bekannt, PPS durch Zusatz von Kupfer-(I)-halogeniden zu stabilisieren (z.B. DE-OS 3 617 138). Schwefelverbindungen in PPS bewirken jedoch mit Kupferverbindungen eine Dunkelfärbung. Ähnlich verhalten sich nickelhaltige Stabilisatoren, wie Nickeldibutyl-dithiocarbamat (z.B. US-PS 4 413 081).

Weiterhin ist bekannt eine Stabilisierung des PPS während der Verarbeitung bewirken (Verzögerung des Curing), z.B. durch Zusatz von Zinncarboxylaten und -oxiden (z.B. EP-OS 94 038), sterisch gehinderten Phenolen (z.B. EP-OS 94 092), N-acylierten Aminotriazolen (z.B. EP-OS 94 091).

Diese Additive ermöglichen jedoch kaum Schutz gegen radikalische Schädigung.

Ein direktes Maß für mangelhafte Stabilität (Bindungsbrüche) bei UV-Belastung ist die Messung der Radikalkonzentration unter Bestrahlung. Nach dieser Meßmethode wurde mit Tetramethylpiperidinen (z.B. US-PS 4 370 430) als PPS-Stabilisatoren, keine Verringerung der Radikalbildungsgeschwindigkeit beobachtet.

Es wurde nun gefunden, daß Mischungen aus Polyarylsulfiden, vorzugsweise Polyphenylensulfid mit ausgewählten Pyrenen eine deutlich niedrigere Radikalbildungsgeschwindigkeit bei Bestrahlung mit UV-Licht unter Luft aufweisen als unstabilisierte und nach dem Stand der Technik ausgerüstete Produkte.

Gegenstand der Erfindung sind daher Mischungen aus

A) 99,1 bis 10 Gew.-% Polyarylensulfiden, vorzugsweise Polyphenylensulfid,

B) 0,1 - 10 Gew.-% eines Pyrens der Formel (I)

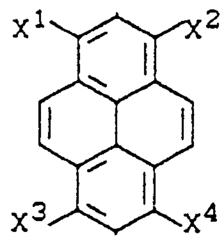

(I),

in welcher

$X^1$-$X^4$ unabhängig voneinander für die Gruppe -S-R, Wasserstoff, F, Cl, Br, J, Nitroreste oder Sulfonsäurereste oder deren (Alkali) Salze (Na, K) stehen, wobei nur zwei der Reste $X^1$-$X^4$ Wasserstoff sein dürfen und

R für $C_1$-$C_{22}$-Alkyl, $C_6$-$C_2$-Cycloalkyl, $C_7$-$C_{22}$-Aralkyl oder- Alkylaryl, $C_6$-$C_{14}$-Aryl, bevorzugt Phenyl, steht, wobei der Arylrest, gegebenenfalls substituiert (z.B. Halogen, $C_1$-$C_4$-Alkyl usw.) sein kann und

C) gegebenenfalls 0,01 bis 100 Gew.-%, bezogen auf die Summe des Gewichts der Komponenten A + B, weiteren Zusatzstoffen.

Beispiele für Reste R der Gruppe -S-R sind Methyl, Ethyl, Isopropyl, n-Butyl, sec-Butyl, tert-Butyl, n-Amyl, iso-Amyl, 2-Ethylhexyl, Dodecyl, Palmityl, Stearyl, Cyclohexyl, Benzyl, Phenyl, Kresyl, Chlorphenyl, Nitrophenyl, Naphthyl.

Die erfindungsgemäß verwendbaren Pyrene sind bekannt und können durch Halogenierung (z.B. DE-OS 3 532 882, Liebigs Ann. Chem. 531, 2 (1937)), Nitrierung oder Sulfonierung von Pyren hergestellt werden.

Die Thioethergruppen-haltigen Pyrene werden durch Umsetzung von 1,2,6,8-Tetrahalogenpyren mit den entsprechenden Mercaptiden in dipolar-aprotischen Solventien (z.B. DE-AS 3 814 534) hergestellt.

Die erfindungsgemäßen Mischungen können gegebenenfalls 0,01 bis 100 Gew.-%, bezogen auf die Summe des Gewichts der Komponenten A + B, übliche Füllstoffe, wie z.B. Glasfasern, Kohlenstoffasern, Talkum, Calciumcarbonat oder Calciumsulfat u.s.w. enthalten.

Die erfindungsgemäßen Mischungen weisen gegenüber nichtstabilisierten Polyarylensulfid den Vorteil auf, bei Bestrahlung mit (UV-Licht > 305 nm) eine geringere Radikalbildungsgeschwindigkeit (gemessen durch ESR bei -110 °C) aufzuweisen. Ferner besitzen sie eine größere Farbstabilität. Sie

können daher bevorzugt zu geformten Körpern verarbeitet werden, die Witterungseinflüßen wie Sonnenlicht ausgesetzt sind.

Beispiele

Vergleichsbeispiel

Man stellt einen Schmelzkörper aus 10 g Poly-p-phenylensulfid mit einer Schmelzviskosität von 44 Pa (306 °C, 1000s⁻¹) her. Man schabt mit einem Korundschaber PPS-Flocken von diesem Schmelzkörper ab und füllt sie in ein ESR-Röhrchen (Durchmesser 3 mm). Man bestrahlt unter Luft bei -110 °C mit einer 500 W-Hg-Lampe, deren kurzwelliger Anteil (<305 nm) herausgefiltert wurde. Die niedrige Temperatur verhindert die Weiterreaktion der durch die Bestrahlung erzeugten Radikale.

Die Differenz der in 60 Min. minus der in 30 Min. gebildeten Radikale wird als Maß für die Radikalbildungsgeschwindkigkeit gewählt. Differenz: 182 (Relativzahlen).

Beispiel 1

Man stellt einen Schmelzkörper aus 10 g PPS und 0,5 g 1,2,6,8-Pyrentetrasulfonsäure, $Na_4$-Salz her und verfährt wie im Vergleichsbeispiel beschrieben.
Differenz: 126.

Beispiel 2

Man stellt einen Schmelzkörper aus 10 g PPS und 0,5 g 1,3,6,8-Tetrabrompyren her und verfährt wie im Vergleichsbeispiel beschrieben.
Differenz: 104.

Beispiel 3

Man stellt einen Schmelzkörper aus 10 g PPS und 0,5 g 1,3,6,8-Tetramethylmercaptopyren her und verfährt wie im Vergleichsbeispiel beschrieben.
Differenz: 130.

Beispiel 4

Man stellt einen Schmelzkörper aus 10 g PPS und 0,5 g 1,3,6,8-Tetraethylmercaptopyren her und verfährt wie im Vergleichsbeispiel beschrieben.
Differenz: 169.

Beispiel 5

Man stellt einen Schmelzkörper aus 10 g PPS und 0,5 g 1,3,6,8-Tetraphenylmercaptopyren her und verfährt wie im Vergleichsbeispiel beschrieben.
Differenz: 74.

Beispiel 6

Man stellt einen Schmelzkörper aus 10 g PPS und 0,5 g 1,3,6-Tribrompyren her und verfährt wie im Vergleichsbeispiel beschrieben.
Differenz: 65.

Beispiel7

Man stellt einen Schmelzkörper aus 10 g PPS und 0,5 g 1,3,6,8-Tetrachlorpyren her und verfährt wie im Vergleichsbeispiel beschrieben.
Differenz: 134.

**Ansprüche**

1. Mischungen aus

A) 99,9 bis 90 Gew.-% Polyarylensulfiden, vorzugsweise Polyphenylensulfid,

B) 0,1 - 10 Gew.-% eines Pyrens der Formel (I)

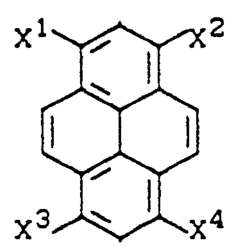

(I),

in welcher
$X^1$-$X^4$ unabhängig voneinander für die Gruppe -S-R, Wasserstoff, F, Cl, Br, J,Nitroreste oder Sulfonsäurereste oder deren (Alkali)-Salze bedeuten, wobei nur zwei der Reste $X^1$-$X^4$ Wasserstoff sein dürfen und
R für $C_1$-$C_{22}$-Alkyl, $C_6$-$C_2$-Cycloalkyl, $C_7$-$C_{22}$-Aralkyl oder -Alkylaryl, $C_6$-$C_{14}$-Aryl, bevorzugt Phenyl, steht, wobei der Arylrest, gegebenenfalls substituiert sein kann
und

C) gegebenenfalls 0,01 bis 100 Gew.-%, bezogen auf die Summe des Gewichts der Komponenten A + B, weiteren Zusatzstoffen.

2. Mischungen nach Anspruch 1, dadurch gekennzeichnet, daß als Polyarylensulfid Poly-paraphenylensulfid eingesetzt wird.

3. Mischungen nach Anspruch 1, dadurch gekennzeichnet, daß als Pyren 1,3,6-Tribrompyren eingesetzt wird.

4. Verwendung von Mischungen nach Anspruch 1 zur Herstellung von geformten Körpern.